# EUROPÄISCHE PATENTSCHRIFT

(11) **EP 2 857 127 B1**
(45) Veröffentlichungstag und Bekanntmachung des Hinweises auf die Patenterteilung: **16.03.2016**
(21) Anmeldenummer: 13187054.5
(22) Anmeldetag: 02.10.2013
(51) Int. Cl.: B23B 31/02, B23B 31/20

(54) **Werkzeughalter mit einer mit einem Werkzeug verspannbaren Spannzange**
Tool holder with a collet chuck for clamping a tool
Porte-outil avec mandrin pour le serrage d'un outil

(43) Veröffentlichungstag der Anmeldung: 08.04.2015
(73) Patentinhaber: Eugen Fahrion GmbH & Co. KG, 73667 Kaiserbach (DE)
(72) Erfinder: Geiger, Markus, 74405 Gaildorf (DE)
(74) Vertreter: DREISS Patentanwälte PartG mbB

(56) Entgegenhaltungen:
- CH-A5- 676 683
- DE-A1- 4 315 612
- DE-A1-102004 050 967
- DE-A1-102006 016 804
- DE-U1-202007 019 453
- DE-U1-202012 010 701
- US-A- 2 270 661
- US-A- 3 136 561
- US-A- 4 377 292
- US-A- 5 873 580
- US-A1- 2007 231 094

## Beschreibung

Die Erfindung betrifft einen Werkzeughalter, mit einer mit einem Werkzeug verspannbaren Spannzange, mit einem Spannzangenaufnahmeteil zur Verbindung mit einer Werkzeugmaschine, und mit einer Spannmutter zur Verbindung der Spannzange mit dem Spannzangenaufnahmeteil.

Aus der DE 20 2007 019 453 U1 ist ein Werkzeughalter bekannt, bei dem Sperrelemente vorgesehen sind, welche eine Verdrehung eines Werkzeugs innerhalb eines Spannzangenaufnahmeteils verhindern. Aus der EP 2 266 732 A1 ist ebenfalls ein Werkzeughalter bekannt, bei welchem ein Sperrelement zur Verdrehsicherung vorgesehen ist. Es hat sich herausgestellt, dass die vorbekannten Werkzeughalter für besonders hohe Beanspruchungen, welche beispielsweise bei der spanenden Bearbeitung von Werkstücken aus Titan auftreten können, nicht oder nur für kleinere Werkzeugdurchmesser geeignet sind.

Aus der CH 676 683 A5 ist ein Werkzeughalter gemäß dem Oberbegriff des Anspruchs 1 bekannt, dessen Spannzange mit einer Außensechskantfläche und dessen Spannzangenaufnahme mit einer Innensechskantfläche versehen ist, um eine Drehmomentenübertragung zu ermöglichen. Ein ähnlicher Werkzeughalter ist aus der DE 20 2012 010 701 U1 bekannt.

Hiervon ausgehend liegt der vorliegenden Erfindung die Aufgabe zugrunde, einen Werkzeughalter bereitzustellen, welcher sich auch für hohe Bearbeitungsmomente, die beispielsweise bei der Bearbeitung von Titan auftreten können, eignet.

Diese Aufgabe wird bei einem Werkzeughalter mit den Merkmalen des Oberbegriffs Anspruchs 1 erfindungsgemäß mit den kennzeichnenden Merkmalen des Anspruchs 1 gelöst.

Erfindungsgemäß wurde erkannt, dass eine prinzipiell hohe Beanspruchung eines Werkzeughalters möglich ist, wenn die Spannzange relativ zu dem Spannzangenaufnahmeteil verdrehgesichert ist. Hierfür wird eine Polygonform verwendet, wobei eine polygonförmige Innenfläche des Spannzangenaufnahmeteils zum Halten einer polygonförmigen Außenfläche der Spannzange dient. Auf diese Weise ist es möglich, die Spannzange relativ zu dem Spannzangenaufnahmeteil gegen Verdrehung zu sichern, und zwar auch, wenn bei Bearbeitung eines zähen Werkstoffs mit großen Werkzeugdurchmessern hohe Bearbeitungskräfte auftreten.

Bei dem Spannzangenaufnahmeteil handelt es sich beispielsweise um ein Spannzangenfutter, welches eine vorzugsweise genormte Schnittstelle zur Verbindung mit einer Werkzeugmaschine aufweist.

Bei der Spannzange handelt es sich beispielsweise um eine Spannzange, welche Schlitze aufweist und deshalb mittels Spannmutter und Spannzangenaufnahmeteil verformbar ist. Im Zuge der Verformung wird ein in der Werkzeugaufnahme der Spannzange angeordneter Schaft eines Werkzeugs mit der Spannzange verspannt.

Bei der Spannzange kann es sich aber auch um eine Schrumpfspannzange handeln, welche üblicherweise keine Schlitze hat und eine Werkzeugaufnahme aufweist, welche vor dem Fügen mit einem Werkzeugschaft aufgeweitet wird, insbesondere durch Erwärmen. Nach dem Fügen des Werkzeugschafts mit der aufgeweiteten Werkzeugaufnahme schrumpft diese durch Abkühlung und verspannt den Werkzeugschaft mit der Spannzange.

Bevorzugt ist es, wenn die Außenfläche und/oder die Innenfläche eine regelmäßige Polygonform aufweist oder aufweisen. Dies hat den Vorteil, dass die Spannzange in mehreren Verdrehlagen mit dem Spannzangenaufnahmeteil gefügt werden kann. Außerdem werden die in Drehrichtung wirksamen Anlagekräfte zwischen der Außenfläche der Spannzange und der Innenfläche des Spannzangenaufnahmeteils vergleichmäßigt.

Im Prinzip ist die Anzahl der Polygonform beliebig wählbar. Eine besonders stabile Verbindung zwischen Spannzange und Spannzangenaufnahmeteil kann jedoch erreicht werden, wenn eine dreieckförmige Polygonform verwendet wird. Eine solche Dreieckform ist auch vergleichsweise einfach herstellbar.

Ferner ist es bevorzugt, wenn die Außenfläche und/oder die Innenfläche relativ zu einer zentralen Spannzangenachse geneigt ist oder sind. Die Außenfläche und/oder die Innenfläche weisen also eine konische Grundform auf, wobei das Profil dieser konischen Grundform polygonförmig ist. Die relativ zu einer zentralen Spannzangenachse geneigten Flächen ermöglichen es, die Spannzange und das Spannzangenaufnahmeteil unter Verwendung der Spannmutter besonders fest, jedoch lösbar miteinander zu verbinden.

Alternativ hierzu verläuft die Außenfläche und/oder die Innenfläche parallel zu einer zentralen Spannzangenachse. Dies ist beispielsweise für Hydrodehn-Systeme vorteilhaft.

Vorzugsweise ist das Profil der Polygonform der Außenfläche und/oder der Innenfläche abgerundet. Insbesondere ist das Profil der Polygonform entlang seines gesamten Verlaufs um die zentrale Spannzangenachse herum stetig differenzierbar, weist also keine Unstetigkeiten in Form von scharfen Kanten oder Sprüngen auf.

Die Erfindung betrifft auch ein Werkzeugsystem mit einem vorstehend beschriebenen Werkzeughalter und mit einem Werkzeug.

Vorzugsweise ist eine Verdrehsicherungseinrichtung vorgesehen, welche das Werkzeug gegen eine Verdrehung relativ zu der Spannzange sichert. In Verbindung mit einem vorstehend beschriebenen Werkzeughalter ergibt sich eine besonders gute Sicherung gegen eine Relativverdrehung von Werkzeug, Spannzange und Spannzangenaufnahmeteil. Somit ist es auch bei einer hohen Beanspruchung ausgeschlossen, dass sich das Werkzeug innerhalb der Spannzange verdreht. Außerdem ist ausgeschlossen, dass sich die Spannzange innerhalb des Spannzangenaufnahmeteils verdreht. Durch das Verhindern von Verdrehbewegungen der genannten Teile relativ zueinander wird nicht nur eine Beschädigung oder Zerstörung dieser Teile verhindert, sondern es wird außerdem sichergestellt, dass ein Werkstück maßgenau bearbeitet werden kann.
Ferner ist es bevorzugt, wenn die Verdrehsicherungseinrichtung zusätzlich als Auszugsicherung wirkt, welche das Werkzeug gegen ein axiales Ausziehen aus der Spannzange sichert. Dies verbessert die Prozesssicherheit auch bei schwierigen Anwendungen, beispielsweise bei derSchwerzerspanung.

Nachstehend werden bevorzugte Verdrehsicherungseinrichtungen beschrieben, welche ein Verdrehen zwischen Werkzeug und Spannzange verhindern. Diese Verdrehsicherungseinrichtungen sind auch für sich genommen vorteilhaft und können auch bei einem Werkzeughalter eingesetzt werden, bei welchen die Spannzange eine konventionelle, also konische und nicht polygonförmige, Außenfläche aufweist und bei welchen das Spannzangenaufnahmeteil eine konventionelle, also konische und nicht polygonförmige, Innenfläche aufweist.

Bei einer bevorzugten Ausführungsform eines Werkzeughalters ist vorgesehen, dass die Verdrehsicherungseinrichtung in Form einer polygonförmigen Innenfläche der Spannzange und in Form einer polygonförmigen Außenfläche des Werkzeugs, welche mit der polygonförmigen Innenfläche der Spannzange zusammenwirkt, ausgebildet ist, sodass das Werkzeug gegen eine Verdrehung gesichert in der Spannzange gehalten ist. Die Verdrehsicherungseinrichtung hat den Vorteil, dass auf ein separates Sicherungselement verzichtet werden kann. Ferner können besonders gute Rundlaufwerte erreicht werden. Darüber hinaus können besonders hohe Drehmomente von der Spannzange auf das Werkzeug übertragen werden.

Zusätzlich oder alternativ hierzu ist es auch möglich, dass die Verdrehsicherungseinrichtung ein von der Spannzange und einem Werkzeug separat bereitgestelltes, insbesondere keilförmiges Sicherungselement umfasst. Ein solches Sicherungselement kann beispielsweise verwendet werden, wenn besonders hohe Bearbeitungsmomente und/oder Auszugskräfte zu erwarten sind.

Bei einer bevorzugten Ausführungsform wirkt das Sicherungselement mit einer an dem Werkzeug ausgebildeten Weldonfläche zusammen. Eine solche Weldonfläche ist genormt und beispielsweise in der DIN-Norm 1835-1 als "Form B" beschrieben. Eine solche Weldonfläche dient im Stand der Technik zur Aufnahme des freien Endes einer Sicherungsschraube, welche mit der Weldonfläche zusammenwirkt und das Werkzeug an einer Verdrehung hindert. Nachteilig bei Verwendung einer Sicherungsschraube ist, dass diese in radialer Richtung auf die Weldonfläche wirkt und somit das Werkzeug innerhalb eines Werkzeughalters aus einer idealzentrischen Lage heraus in eine exzentrische Lage drückt.

Bevorzugt ist es ferner, wenn eine Andrückeinrichtung vorgesehen ist, welche das Werkzeug in einen mit der Spannzange gefügten Zustand in Richtung auf ein vorderes Ende der Spannzange drückt. Im Rahmen der vorliegenden Erfindung wird unter "vorderes Ende der Spannzange" dasjenige Ende der Spannzange verstanden, welches einer Werkzeugmaschine abgewandt und einem zu bearbeitenden Werkstück zugewandt ist. Die Andrückeinrichtung hat den Vorteil, dass eine Vorspannkraft aufgebaut werden kann, welche zwischen dem Werkzeug, dem Sicherungselement und der Spannzange wirkt, sodass unabhängig von der Belastung eines Werkzeugs ein Kraftschluss und/oder Formschluss zwischen dem Werkzeug, dem Sicherungselement und der Spannzange hergestellt wird.

Bei einer besonders bevorzugten Ausführungsform der Erfindung ist vorgesehen, dass die Spannzange eine Materialaussparung zur zumindest anteiligen Aufnahme des Sicherungselements aufweist, wobei die Materialaussparung derart geformt ist, dass das Sicherungselement längs einer geradlinigen Fügeachse mit der Spannzange fügbar ist. Dies ermöglicht eine besonders einfache Montage des Sicherungselements.

Besonders bevorzugt ist es, dass die Fügeachse parallel zu einer zentralen Spannzangenachse verläuft oder wenn sich eine gedachte Verlängerung der Fügeachse mit einer zentralen Spannzangenachse schneidet und die Fügeachse eine parallel zu der zentralen Spannzangenachse verlaufende Richtungskomponente aufweist. Diese Orientierungen der Fügeachse ermöglichen eine besonders einfache Montage des Sicherungselements an der Spannzange.

Bei einer Ausführungsform der Erfindung ist vorgesehen, dass die Materialaussparung relativ zueinander geneigte, einander gegenüberliegende Begrenzungsflächen aufweist, welche auf voneinander abgewandten Seiten der Fügeachse angeordnet sind, wobei sich der Abstand der Begrenzungsflächen entlang einer Richtung erweitert, welche ausgehend von einem vorderen Ende der Spannzange auf das rückwärtige Ende der Spannzange zeigt. Auf diese Weise kann eine besonders stabile Sicherungseinrichtung geschaffen werden, welche ein Werkzeug sowohl gegen eine Verdrehung als auch gegen einen Auszug aus der Spannzange sichert. Im Rahmen der vorliegenden Erfindung wird unter dem rückwärtigen Ende der Spannzange dasjenige Ende verstanden, das im montierten Zustand des Werkzeughalters einer Werkzeugmaschine zugewandt und einem zu bearbeitenden Werkstück abgewandt ist.

Bei einer weiteren bevorzugten Ausführungsform ist vorgesehen, dass die Materialaussparung eine umfangsseitig geschlossene Begrenzungsfläche aufweist, welche die Fügeachse umgibt. Beispielsweise weist die Spannzange eine Durchbrechung der Spannzangenwandung auf, welche ein Einsetzen des Sicherungselements von der Außenseite der Spannzange her in Richtung auf die Innenfläche der Spannzange ermöglicht, um dort mit einer Außenfläche (insbesondere einer Weldonfläche) eines in die Spannzange eingesetzten Werkzeugs zusammenzuwirken.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine perspektivische Explosionsdarstellung einer ersten Ausführungsform eines Werkzeughalters;
- Fig. 2: einen Querschnitt einer Außenfläche einer Spannzange und einer Innenfläche eines Spannzangenaufnahmeteils des Werkzeughalters gemäß Fig. 1 und einen Querschnitt einer Außenfläche eines Werkzeugschafts und einer Innenfläche der Spannzange des Werkzeughalters gemäß Fig. 1;
- Fig. 3: eine perspektivische Explosionsdarstellung einer weiteren Ausführungsform eines Werkzeughalters;
- Fig. 4: eine Seitenansicht des Werkzeughalters gemäß Fig. 3 in einem Längsschnitt;
- Fig. 5: eine perspektivische Explosionsansicht einer weiteren Ausführungsform einer Spannzange, eines Sicherungselements und eines Werkzeugs;
- Fig. 6: eine perspektivische Darstellung der Spannzange gemäß Fig. 5; und
- Fig. 7: eine perspektivische Darstellung der Ausführungsform gemäß Fig. 5 aus einer rückwärtigen Perspektive.

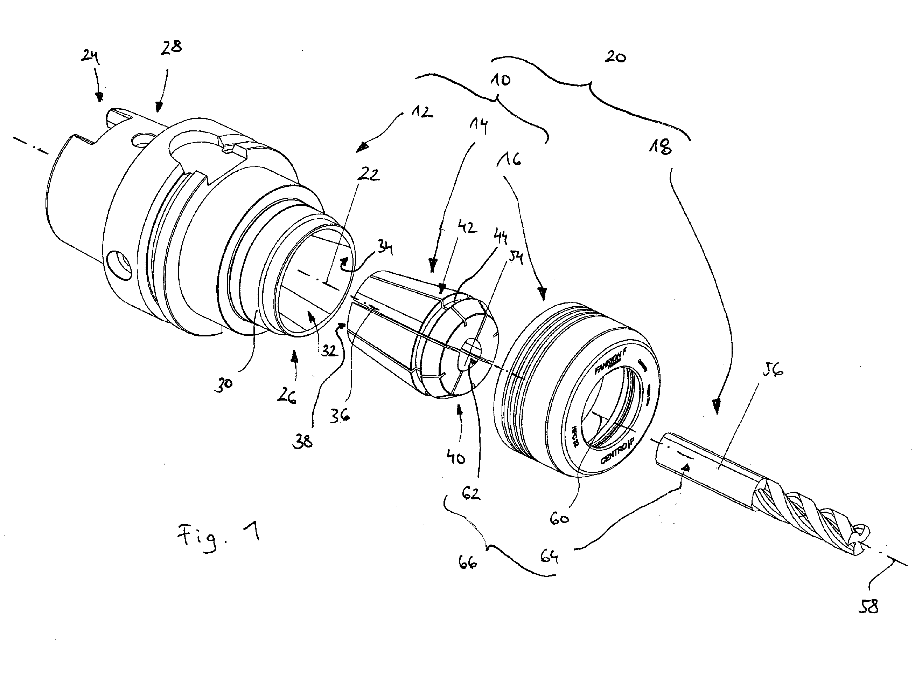

Eine Ausführungsform eines Werkzeughalters ist in Figur 1 insgesamt dem Bezugszeichen 10 bezeichnet. Der Werkzeughalter 10 umfasst drei Bauteile, nämlich ein Spannzangenaufnahmeteil 12 in Form eines Spannzangenfutters, eine Spannzange 14 und eine Spannmutter 16.

Der Werkzeughalter 10 dient zum Halten eines Werkzeugs 18, beispielsweise eines Fräsers, eines Bohrers oder eines Gewindebohrers. Der Werkzeughalter und das Werkzeug 18 bilden gemeinsam ein Werkzeugsystem 20.

Die Bauteile 12 bis 18 weisen jeweils zentrale Achsen auf. Diese zentralen Achsen sind in einem gefügten Zustand der Bauteile 12 bis 18 miteinander identisch.

Das Spannzangenaufnahmeteil 12 weist eine zentrale Spannzangenaufnahmeteilachse 22 auf, welche sich zwischen einem rückwärtigen Ende 24 des Spannzangenaufnahmeteils 12 und einem vorderen Ende 26 des Spannzangenaufnahmeteils 12 erstreckt. Das rückwärtige Ende 24 dient zur Verbindung mit einer Werkzeugmaschine. Hierfür weist das Spannzangenaufnahmeteil 12 eine an sich bekannte und daher nicht weiter erläuterte Schnittstelle 28 auf. Bei der Schnittstelle 28 kann es sich beispielsweise um eine HSK-Schnittstelle oder eine andere Schnittstelle handeln.

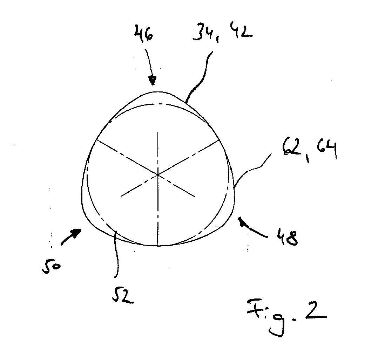

Das vordere Ende 26 des Spannzangenaufnahmeteils 12 umfasst einen mit einem Außengewinde versehenen, ringförmigen Gehäuseabschnitt 30, welcher sich um die zentrale Spannzangenaufnahmeteilachse 22 erstreckt. Der Gehäuseabschnitt 30 begrenzt einen Aufnahmeraum 32, welcher zur Aufnahme, also zum Einfügen, der Spannzange 14 dient. Der Aufnahmeraum 32 weist eine sich um die zentrale Spannzangenaufnahmeteilachse 22 erstreckende Innenfläche 34 auf, welche eine auch aus Figur 2 ersichtliche Polygonform aufweist. Der Querschnitt der Innenfläche 34 verjüngt sich von dem vorderen Ende 26 des Spannzangenaufnahmeteils 12 aus gesehen in Richtung auf das rückwärtige Ende 24 des Spannzangenaufnahmeteils 12.

Die Spannzange 14 erstreckt sich längs einer zentralen Spannzangenachse 36 zwischen einem rückwärtigen Ende 38 und einem vorderen Ende 40. Das rückwärtige Ende dient zum Einführen der Spannzange 14 in den Aufnahmeraum 32 des Spannzangenaufnahmeteils 12. Das vordere Ende 40 der Spannzange 14 ist im montierten Zustand des Werkzeugsystems 20 einem zu bearbeitenden Werkstück zugewandt.

Die Spannzange 14 weist eine Außenfläche 42 auf, welche ebenfalls polygonförmig ist, vergleiche auch Figur 2. Die Außenfläche 42 erstreckt sich von dem rückwärtigen Ende 38 der Spannzange 14 bis zu einem zu dem vorderen Ende 40 der Spannzange 14 benachbarten Bereich, in welchem eine Ringnut 44 vorgesehen ist.

Der von der Außenfläche 42 umgrenzte Querschnitt verjüngt sich ausgehend von dem Bereich 44 in Richtung auf das hintere Ende 38 der Spannzange 14.

Die Innenfläche 34 des Spannzangenaufnahmeteils 12 und die Außenfläche 42 der Spannzange 14 sind polygonförmig, insbesondere im Profil dreieckförmig, vergleiche auch Figur 2. Die Eckbereiche des Profils sind in Figur 2 mit den Bezugszeichen 46, 48, 50 bezeichnet. In diesen Eckbereichen erstrecken sich die Polygonformen der Außenfläche 42 und der Innenfläche 34 nach radial außen über einen zum Vergleich eingezeichneten Kreis 52 hinaus. Die Übergänge zwischen den Eckbereichen 46 und 48 bzw. 48 und 50 bzw. 50 und 46 sowie die Eckbereiche 46, 48 und 50 selbst sind verrundet.

Die Spannzange 14 weist eine sich längs der zentralen Spannzangenachse 36 erstreckende Werkzeugaufnahme 54 zur Aufnahme eines Schafts 56 des Werkzeugs 12 auf. Das Werkzeug 18 erstreckt sich längs einer Werkzeugachse 58.

Die Spannmutter 60 erstreckt sich längs einer Spannmutterachse 60. Zur Montage des Werkzeugsystems 20 wird die Spannzange 14 in die Spannmutter 16 eingesetzt und das Werkzeug 18 mit dem Schaftende 56 voran in den Werkzeugaufnahmebereich 54 der Spannzange 14 eingeführt. Anschließend wird die Spannzange 14 mit dem daran gehaltenen Werkzeug 18 mit dem rückwärtigen Ende 38 der Spannzange 14 voran in den Aufnahmebereich 32 des Spannzangenaufnahmeteils 12 eingeführt. Hierbei gelangt die polygonförmige Außenfläche 42 der Spannzange 14 mit der polygonförmigen Innenfläche 34 des Spannzangenaufnahmeteils 12 in Anlage. Abschließend wird ein Innengewinde der Spannmutter 16 mit dem Außengewinde des Gehäuseabschnitts 30 des Spannzangenaufnahmeteils 12 verschraubt. Im Zuge der Verschraubung wird das Spannzangenaufnahmeteil 12 mit der Spannzange 14 und die Spannzange 14 mit dem Schaft 56 des Werkzeugs 18 verspannt.

Bei dem Werkzeugsystem 20 ist vorteilhaft, dass die Spannzange 14 mittels der polygonförmigen Außenfläche 42 verdrehsicher innerhalb der polygonförmigen Innenfläche 34 des Spannzangenaufnahmeteils 12 gehalten ist.

Es ist möglich, dass die Werkzeugaufnahme 54 im Profil kreisförmig ist und mit einem kreisförmigen Werkzeugschaft 56 des Werkzeugs 18 zusammenwirkt.

Der nachstehend beschriebene Aspekt der Erfindung ist auch für sich genommen vorteilhaft und auch bei Werkzeugsystemen realisierbar, deren Spannzange und Spannzangenaufnahmeteil konventionelle, beispielsweise konische Anlageflächen aufweisen und keine polygonförmige, als Verdrehsicherung dienende Anlageflächen.

In vorteilhafter Weise ist vorgesehen, dass die die Werkzeugaufnahme 54 begrenzende Innenfläche 62 der Spannzange 14 eine Polygonform aufweist, welche mit einer komplementär hierzu geformten, ebenfalls polygonförmigen Außenfläche 64 des Werkzeugschafts 56 zusammenwirkt. Die polygonförmige Innenfläche 62 der Spannzange 14 und die polygonförmige Außenfläche 64 des Werkzeugschafts 56 bilden gemeinsam eine Verdrehsicherungseinrichtung 66. Diese verhindert eine Verdrehung des Werkzeugs 18 innerhalb der Spannzange 14.

Wie bereits erwähnt, eignet sich die vorstehend beschriebene Verdrehsicherungseinrichtung 66 auch für Werkzeughalter 10, bei denen Spannzangenaufnahmeteil 12 und Spannzange 14 über konische Außenflächen und Innenflächen miteinander zusammenwirken, welche keine Polygonform aufweisen. Dies gilt auch für nachfolgend beschriebene, weitere Ausführungsformen von Verdrehsicherungseinrichtungen, welche jeweils in Verbindung mit Spannzangen 14 und Spannzangenaufnahmeteilen 12 vorteilhaft sind, welche entweder über konische Außen- und Innenflächen miteinander zusammenwirken oder über Außen- und Innenflächen, welche für eine Verdrehsicherung der Spannzange 14 innerhalb des Spannzangenaufnahmeteils 12 eine Polygonform aufweisen.

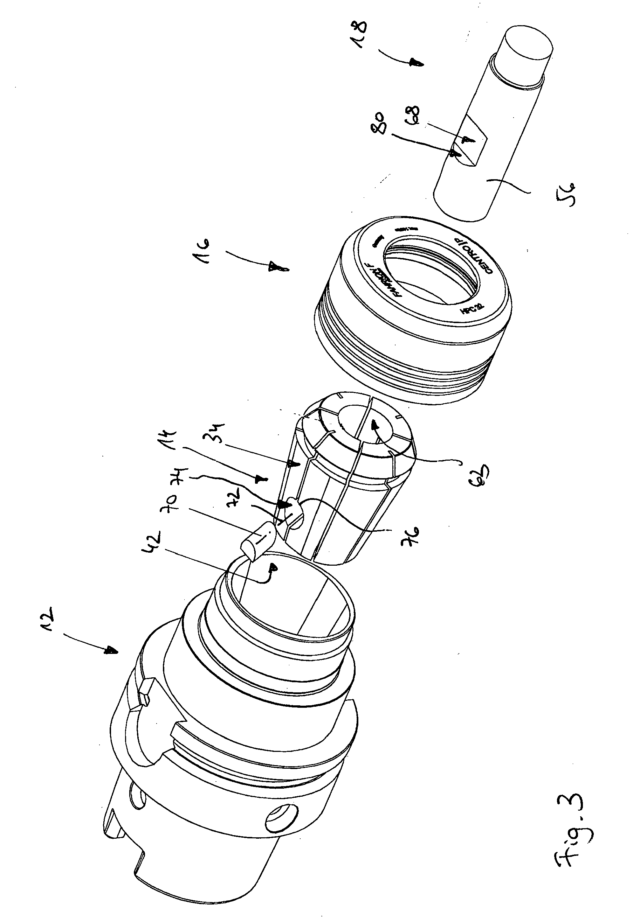

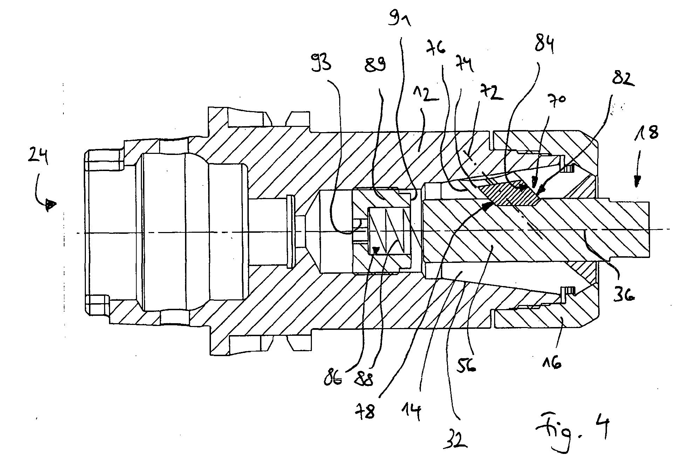

Eine weitere Verdrehsicherungseinrichtung zur Sicherung eines Werkzeugs 18 gegen eine Verdrehung relativ zu einer Spannzange 14 wird nachfolgend unter Bezugnahme auf Figuren 3 und 4 beschrieben. Die nachfolgend beschriebene Verdrehsicherungseinrichtung eignet sich insbesondere für Werkzeuge 18, deren Schaft 56 mit einer Weldonfläche 68 versehen ist. Die Weldonfläche 68 ist ein ausgehend von einer kreiszylindrischen Schaftfläche nach innen eingezogener und abgeflachter Bereich, dessen Geometrie auch in der Norm DIN 1835-1 beschrieben ist. Die Weldonfläche 68 wirkt erfindungsgemäß mit einem keilförmigen Sicherungselement 70 zusammen, welches längs einer geradlinigen Fügeachse 72 mit der Spannzange 14 gefügt wird. Hierfür weist die Spannzange 14 eine sich zwischen der Außenfläche 34 und einer Innenfläche 63 der Spannzange 14 erstreckende Durchbrechung 74 mit einer Begrenzungsfläche 76 auf.

In Figur 4 ist das Sicherungselement 70 in einem mit der Spannzange 14 und dem Werkzeug 18 gefügten Zustand dargestellt. Das Sicherungselement 70 wirkt mit einer rückwärtigen Keilfläche 78 mit einer rückwärtigen Gegenfläche 80 der Weldonfläche 68 zusammen (vergleiche auch Fig. 3). Eine vordere Keilfläche 82 des Sicherungselements 70 wirkt mit einer Gegenfläche 84 der Spannzange 14 zusammen, welche vorzugsweise Teil der Begrenzungsfläche 76 der Materialaussparung 74 ist.

Zum Andrücken des Werkzeugs 18 bzw. der Gegenfläche 80 gegen die rückwärtige Keilfläche 78 des Sicherungselements 70 und zur Übertragung dieser Druckkraft auf die vordere Keilfläche 82 und die Gegenfläche 84 der Spannzange 14 ist eine Andrückeinrichtung 86 in Form einer Feder 88 vorgesehen. Die Feder 88 dient als Montagehilfe und drückt auf das rückwärtige Ende des Schafts 56 des Werkzeugs 18. Zum Abschluss der Montage wird ein Anschlagelement 89 mit einer Anschlagfläche 91 in Anlage mit der rückwärtigen Stirnfläche des Werkzeugs 18 gebracht. Hierfür ist eine Innensechskantfläche 93 vorgesehen, welche von der Rückseite 24 des Spannzangenaufnahmeteils 12 her zugänglich ist. Das Anschlagelement 89 dient vorzugsweise auch zur Aufnahme der Feder 88.

Aus Figur 4 ist erkennbar, dass eine gedachte Verlängerung der Fügeachse 72 die zentrale Spannzangenachse 36 schneidet. Dabei ist die Fügeachse 72 relativ zu einer radialen Richtung geneigt; die Fügeachse 72 weist also auch eine parallel zu der zentralen Spannzangenachse verlaufende Richtungskomponente auf.

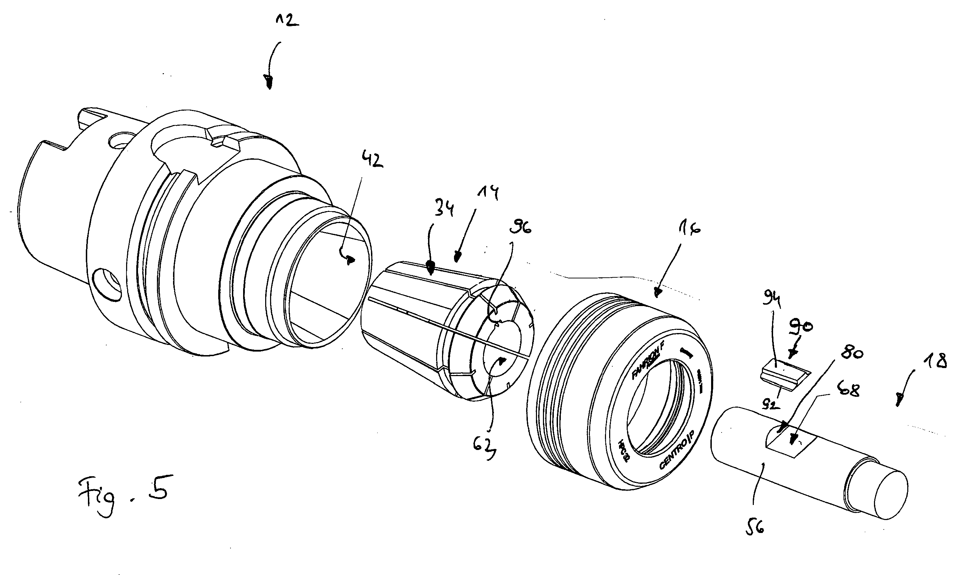

Eine weitere Verdrehsicherungseinrichtung zur Sicherung eines Werkzeugs 18 gegen eine Verdrehung relativ zu einer Spannzange 14 wird nachfolgend unter Bezugnahme auf Figuren 5 bis 7 beschrieben. Auch bei dieser Sicherungseinrichtung kann eine Weldonfläche 68 eines Werkzeugs 18 genutzt werden. Ein mit der Weldonfläche 68 zusammenwirkendes Sicherungselement 90 weist einen ersten Abschnitt 92 auf, welcher komplementär zu der Weldonfläche 68 ausgebildet ist. Ein zweiter Abschnitt 94 des Sicherungselements 90 ist keilförmig ausgebildet und wirkt mit einer Materialaussparung 74 zusammen, welche innerhalb einer (hohlzylindrischen) Innenfläche 63 der Spannzange 14 ausgebildet ist.

Die Materialaussparung 74 erstreckt sich parallel zu der zentralen Spannzangenachse 36 und ist in Form einer Nut ausgebildet, welche ein vorderes Ende 96 und ein rückwärtiges Ende 98 aufweist. Die Enden 96 und 98 können jeweils auf Höhe der Enden 38 und 40 der Spannzange 14 oder längs der zentralen Achse 36 gesehen nach innen versetzt angeordnet sein.

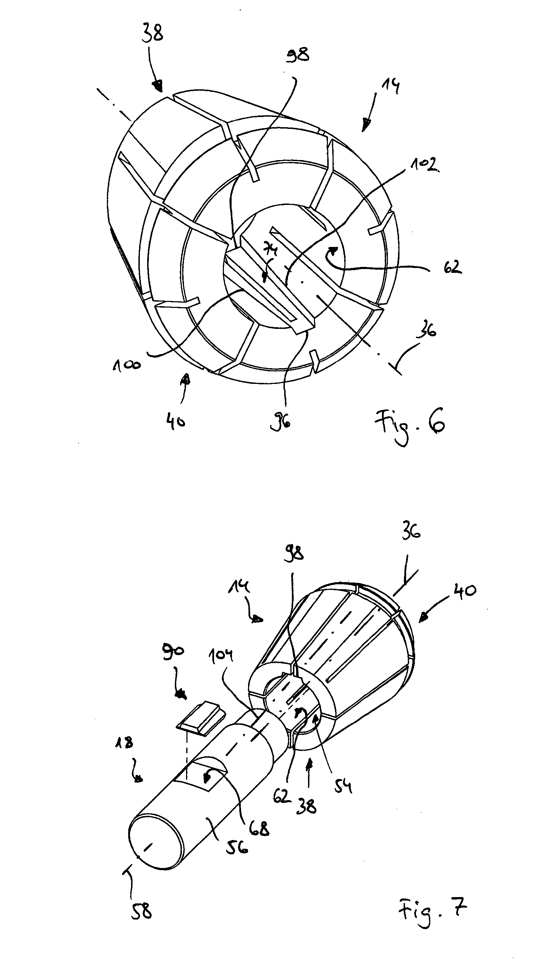

Die Materialaussparung 74 ist seitlich begrenzt durch Begrenzungsflächen 100, 102, welche an dem vorderen Ende 96 einen kleineren Abstand relativ zueinander aufweisen als an dem rückwärtigen Ende 98 der Materialaussparung 74. Zur Montage des Werkzeugs 18 in der Spannzange 14 wird zunächst das Sicherungselement 90 mit dem ersten Abschnitt 92 voran mit der Weldonfläche 68 gefügt (vergleiche Figur 7). Anschließend wird die Einheit aus Werkzeug 18 und Sicherungselement 90 von dem rückwärtigen Ende 38 der Spannzange 14 her mit der (nicht dargestellten) Spitze des Werkzeugs voran in den Werkzeugaufnahmeraum 54 der Spannzange 14 eingeschoben. Hierbei wird das Sicherungselement 90 längs einer geradlinigen Fügeachse 104 mit der Materialaussparung 74 der Spannzange 14 gefügt, bis sich die Keilflächen des zweiten Abschnitts 94 des Sicherungselements 90 mit den sich in Fügerichtung verengenden Begrenzungsflächen 100, 102 verklemmen. Die Fügeachse 104 verläuft parallel zu der zentralen Spannzangenachse 36.

Die vorstehend unter Bezugnahme auf Figuren 3 bis 7 beschriebenen Verdrehsicherungseinrichtungen wirken auch als Auszugsicherung, wodurch das Werkzeug 18 gegen ein axiales Ausziehen aus der Spannzange 14 gesichert ist. Die Fügeachsen 72 und 104 sind geradlinig und weisen keine Richtungskomponente in Richtung eines Umfangs um die zentrale Spannzangenachse 36 auf. Hierdurch wird eine besonders einfache Montage der Sicherungselemente 70, 90 an der Spannzange 14 ermöglicht.

## Patentansprüche

1. Werkzeughalter (10), mit einer mit einem Werkzeug (18) verspannbaren Spannzange (14), mit einem Spannzangenaufnahmeteil (12) zur Verbindung mit einer Werkzeugmaschine, und mit einer Spannmutter (16) zur Verbindung der Spannzange (14) mit dem Spannzangenaufnahmeteil (12), wobei die Spannzange (14) eine polygonförmige Außenfläche (42) aufweist, welche mit einer polygonförmigen Innenfläche (34) des Spannzangenaufnahmeteils (12) zusammenwirkt, sodass die Spannzange (14) gegen eine Verdrehung gesichert in dem Spannzangenaufnahmeteil (12) gehalten ist, wobei sich die Spannzange (14) längs einer zentralen Spannzangenachse (36) zwischen einem rückwärtigen Ende (38) und einem vorderen Ende (40) erstreckt, wobei das rückwärtige Ende (38) zum Einführen der Spannzange (14) in einen Aufnahmeraum (32) des Spannzangenaufnahmeteils (12) dient, wobei in einem zu dem vorderen Ende (40) benachbarten Bereich eine Ringnut (44) vorgesehen ist, **dadurch gekennzeichnet, dass** sich die polygonförmige Außenfläche (42) von dem rückwärtigen Ende (38) der Spannzange (14) bis zu dem zu dem vorderen Ende (40) der Spannzange (14) benachbarten Bereich erstreckt.

2. Werkzeughalter (10) nach Anspruch 1, **dadurch gekennzeichnet, dass** die Außenfläche (42) und/oder die Innenfläche (34) eine regelmäßige-Polygonform aufweist oder aufweisen.

3. Werkzeughalter (10) nach einem der voranstehenden Ansprüche, **dadurch gekennzeichnet, dass** die Außenfläche (42) und/oder die Innenfläche (34) im Profil dreieckförmig ist oder sind.

4. Werkzeughalter (10) nach einem der voranstehenden Ansprüche, **dadurch gekennzeichnet, dass** die Außenfläche (42) und/oder die Innenfläche (34) relativ zu einer zentralen Spannzangenachse (36) geneigt ist oder sind.

5. Werkzeughalter (10) nach einem der voranstehenden Ansprüche, **dadurch gekennzeichnet, dass** die Außenfläche (42) und/oder die Innenfläche (34) parallel zu einer zentralen Spannzangenachse (36) verläuft oder verlaufen.

6. Werkzeughalter (10) nach einem der voranstehenden Ansprüche, **dadurch gekennzeichnet, dass** der Werkzeughalter (10) Teil eines Werkzeugsystems (20) ist, welches ein Werkzeug (18) umfasst.

7. Werkzeughalter (10) nach Anspruch 6, **dadurch gekennzeichnet, dass** eine Verdrehsicherungseinrichtung (66) vorgesehen ist, welche das Werkzeug (18) gegen eine Verdrehung relativ zu der Spannzange (14) sichert.

8. Werkzeughalter (10) nach Anspruch 7, **dadurch gekennzeichnet, dass** die Verdrehsicherungseinrichtung (66) zusätzlich als Auszugsicherung wirkt, welche das Werkzeug (18) gegen ein axiales Ausziehen aus der Spannzange (14) sichert.

9. Werkzeughalter (10) nach einem der Ansprüche 6 bis 8, **dadurch gekennzeichnet, dass** die Verdrehsicherungseinrichtung (66) in Form einer polygonförmigen Innenfläche (62) der Spannzange (14) und in Form einer polygonförmigen Außenfläche (64) des Werkzeugs (18), welche mit der polygonförmigen Innenfläche (62) der Spannzange (14) zusammenwirkt, ausgebildet ist, sodass das Werkzeug (18) gegen eine Verdrehung gesichert in der Spannzange (14) gehalten ist.

10. Werkzeughalter (10) nach einem der Ansprüche 6 bis 9, **dadurch gekennzeichnet, dass** die Verdrehsicherungseinrichtung ein von der Spannzange (14) und einem Werkzeug (18) separat bereitgestelltes, insbesondere keilförmiges Sicherungselement (70, 90) umfasst.

11. Werkzeughalter (10) nach Anspruch 10, **dadurch gekennzeichnet, dass** das Sicherungselement (70, 90) mit einer an dem Werkzeug (18) ausgebildeten Weldonfläche (68) zusammenwirkt.

12. Werkzeughalter (10) nach einem der Ansprüche 6 bis 11, **dadurch gekennzeichnet, dass** eine Andrückeinrichtung (86) vorgesehen ist, welche das Werkzeug (18) in einem mit der Spannzange (14) gefügten Zustand in Richtung auf ein vorderes Ende (40) der Spannzange (14) drückt.

13. Werkzeughalter (10) nach einem der Ansprüche 10 bis 12, **dadurch gekennzeichnet, dass** die Spannzange (14) eine Materialaussparung (74) zur zumindest anteiligen Aufnahme des Sicherungselements (70) aufweist, wobei die Materialaussparung (74) derart geformt ist, dass das Sicherungselement (70) längs einer geradlinigen Fügeachse (72, 104) mit der Spannzange (14) fügbar ist.

14. Werkzeughalter (10) nach Anspruch 13, **dadurch gekennzeichnet, dass** die Fügeachse (72) parallel zu einer zentralen Spannzangenachse (36) verläuft oder dass sich eine gedachte Verlängerung der Fügeachse (72) mit einer zentralen Spannzangenachse (36) schneidet und die Fügeachse (72) eine parallel zu der zentralen Spannzangenachse (36) verlaufende Richtungskomponente aufweist.

15. Werkzeughalter (10) nach Anspruch 13 oder 14, **dadurch gekennzeichnet, dass** die Materialaussparung (74) relativ zueinander geneigte, einander gegenüberliegende Begrenzungsflächen (100, 102) aufweist, welche auf voneinander abgewandten Seiten der Fügeachse (104) angeordnet sind, wobei sich der Abstand der Begrenzungsflächen (100, 102) entlang einer Richtung erweitert, welche ausgehend von einem vorderen Ende (40) der Spannzange (14) auf das rückwärtige Ende (38) der Spannzange (14) zeigt.

16. Werkzeughalter (10) nach Anspruch 13 oder 14, **dadurch gekennzeichnet, dass** die Materialaussparung (74) eine Begrenzungsfläche (76) aufweist, welche die Fügeachse (72) umgibt.

## Claims

1. Tool holder (10), having a collet (14) able to be clamped to a tool (18), having a collet receiving part (12) for connection to a machine-tool, and having a clamping nut (16) for connecting the collet (14) to the collet receiving part (12), the collet (14) having a polygonal outer surface (42) which co-operates with a polygonal inner surface (34) of the collet receiving part (12), the collet (14) thus being held secure against twisting in the collet receiving part (12), the collet (14) extending along a collet central axis (36) between a rear end (38) and a front end (40), the rear end (38) serving to allow the collet (14) to be inserted in a receiving space (32) in the collet receiving part (12), an annular groove (44) being provided in a region adjacent the front end (40), **characterised in that** the polygonal outer surface (42) extends from the rear end (38) of the collet (14) to the region adjacent the front end (40) of the collet (14).

2. Tool holder (10) according to claim 1, **characterised in that** the outer surface (42) and/or the inner surface (34) are or is in the form of a regular polygon.

3. Tool holder (10) according to either of the preceding claims, **characterised in that** the outer surface (42) and/or the inner surface (34) are or is triangular in outline.

4. Tool holder (10) according to one of the preceding claims, **characterised in that** the outer surface (42) and/or the inner surface (34) are or is inclined relative to a collet central axis (36).

5. Tool holder (10) according to one of the preceding claims, **characterised in that** the outer surface (42) and/or the inner surface (34) extend or extends parallel to a collet central axis (36).

6. Tool holder (10) according to one of the preceding claims, **characterised in that** the tool holder (10) is part of a tool system (20) which comprises a tool (18).

7. Tool holder (10) according to claim 6, **characterised in that** an anti-twisting means (66) is provided which secures the tool (18) against twisting relative to the collet (14).

8. Tool holder (10) according to claim 7, **characterised in that** the anti-twisting means (66) acts in addition as an anti-pullout means which secures the tool (18) against being pulled out of the collet (14) axially.

9. Tool holder (10) according to one of claims 6 to 8, **characterised in that** the anti-twisting means (66) takes the form of a polygonal inner surface (62) of the collet (14) and the form of a polygonal outer surface (64) of the tool (18) which co-operates with the polygonal inner surface (62) of the collet (14), the tool (14) thus being held secure against twisting in the chuck (14).

10. Tool holder (10) according to one of claims 6 to 9, **characterised in that** the anti-twisting means comprises a securing member (70, 90) which is, in particular, wedge-like and which is provided separately from the collet (14) and a tool (18).

11. Tool holder (10) according to claim 10, **characterised in that** the securing member (70, 90) co-operates with a Weldon flat (68) formed on the tool (18).

12. Tool holder (10) according to one of claims 6 to 11, **characterised in that** a pressure-applying means (86) is provided which urges the tool (18), when the latter is in a state where it is mated with the collet (14), in the direction of a front end (40) of the collet (14).

13. Tool holder (10) according to one of claims 10 to 12, **characterised in that** the collet (14) has a cut-out (74) from its material to receive at least a part of the securing member (70), the cut-out (74) from the material being so shaped that the securing member (70) can be mated with the collet (14) along a straight mating axis (72, 104).

14. Tool holder (10) according to claim 13, **characterised in that** the mating axis (72) extends parallel to a collet central axis (36) or **in that** a imaginary prolongation of the mating axis (72) intersects a collet central axis (36) and the mating axis (72) has a component of its direction which extends parallel to the collet central axis (36).

15. Tool holder (10) according to claim 13 or 14, **characterised in that** the cut-out (74) from the material has boundary surfaces (100, 102) which are inclined relative to one another, which are situated opposite one another and which are arranged on sides of the mating axis (104) which are remote from one another, the distance between the boundary surfaces (100, 102) increasing in a direction which, starting from a front end (40) of the collet (14), points towards the rear end (38) of the collet (14).

16. Tool holder (10) according to claim 13 or 14, **characterised in that** the cut-out (74) from the material has a boundary surface (76) which surrounds the mating axis (72).

## Revendications

1. Porte-outil (10) avec une pince de serrage (14) pouvant être serrée avec un outil (18), avec une partie de logement de pince de serrage (12) pour une liaison avec une machine-outil et avec un écrou de serrage (16) pour la liaison de la pince de serrage (14) avec la partie de logement de pince de serrage (12), la pince de serrage (14) présentant une surface externe polygonale (42), qui interagit avec une surface interne polygonale (34) de la partie de logement de pince de serrage (12), de façon à ce que la pince de serrage (14) soit maintenue de manière sécurisée contre une rotation dans la partie de logement de pince de serrage (12), la pince de serrage (14) s'étendant le long d'un axe de pince de serrage central (36) entre une extrémité arrière (38) et une extrémité avant (40), l'extrémité arrière (38) permet d'introduire de la pince de serrage (14) dans un espace de logement (32) de la partie de logement de pince de serrage (12), une rainure annulaire (44) étant prévue dans une zone proche de l'extrémité avant (40), **caractérisé en ce que** la surface externe polygonale (42) s'étend de l'extrémité arrière (38) de la pince de serrage (14) jusqu'à la zone proche de l'extrémité avant (40) de la pince de serrage (14).

2. Porte-outil (10) selon la revendication 1, **caractérisé en ce que** la surface externe (42) et/ou la surface interne (34) présente(nt) une forme polygonale régulière.

3. Porte-outil (10) selon l'une des revendications précédentes, **caractérisé en ce que** la surface externe (42) et/ou la surface interne (34) présente(nt) un profil de forme triangulaire.

4. Porte-outil (10) selon l'une des revendications précédentes, **caractérisé en ce que** la surface externe (42) et/ou la surface interne (34) est/sont inclinée(s) par rapport à un axe de pince de serrage central (36).

5. Porte-outil (10) selon l'une des revendications précédentes, **caractérisé en ce que** la surface externe (42) et/ou la surface interne (34) s'étend(ent) parallèlement à un axe de pince de serrage central (36).

6. Porte-outil (10) selon l'une des revendications précédentes, **caractérisé en ce que** le porte-outil (10) fait partie d'un système d'outil (20) qui comprend un outil (18).

7. Porte-outil (10) selon la revendication 6, **caractérisé en ce qu'**un dispositif de protection anti-rotation (66) est prévu, qui sécurise l'outil (18) contre une rotation par rapport à la pince de serrage (14).

8. Porte-outil (10) selon la revendication 7, **caractérisé en ce qu'**un dispositif de protection anti-rotation (66) agit en outre comme un dispositif anti-extraction qui sécurise l'outil (18) contre une extraction axiale hors de la pince de serrage (14).

9. Porte-outil (10) selon l'une des revendications 6 à 8, **caractérisé en ce que** le dispositif de protection anti-rotation (66) est réalisé sous la forme d'une surface interne polygonale (62) de la pince de serrage (14) et sous la forme d'une surface externe polygonale (64) de l'outil (18), qui interagit avec la surface interne (62) de la pince de serrage (14), de façon à ce que l'outil (18) soit maintenu de manière sécurisée contre une rotation dans la pince de serrage (14).

10. Porte-outil (10) selon l'une des revendications 6 à 9, **caractérisé en ce que** le dispositif de protection anti-rotation comprend un élément de sécurisation (70, 90) fourni séparément de la pince de serrage (14) et d'un outil (18), plus particulièrement en forme de coin.

11. Porte-outil (10) selon la revendication 10, **caractérisé en ce que** l'élément de sécurisation (70, 90) interagit avec un méplat Weldon (68) réalisé sur l'outil (18).

12. Porte-outil (10) selon l'une des revendications 6 à 11, **caractérisé en ce qu'**un dispositif de compression (86) est prévu, qui comprime l'outil (18), dans un état jointé avec la pince de serrage (14), en direction d'une extrémité avant (40) de la pince de serrage (14).

13. Porte-outil (10) selon l'une des revendications 10 à 12, **caractérisé en ce que** la pince de serrage (14) comprend un évidement (74) pour le logement au moins partiel de l'élément de sécurisation (70), l'évidement (74) présentant une forme telle que l'élément de sécurisation (70) puisse être assemblé avec la pince de serrage (14) le long d'un axe d'assemblage (72, 104) en ligne droite.

14. Porte-outil (10) selon la revendication 13, **caractérisé en ce que** l'axe d'assemblage (72) est parallèle à un axe de pince de serrage central (36) ou **en ce qu'**un prolongement imaginaire de l'axe d'assemblage (72) coupe un axe de pince de serrage central (36) et l'axe d'assemblage (72) comprend une composante de direction s'étendant parallèlement à l'axe de pince de serrage central (36).

15. Porte-outil (10) selon la revendication 13 ou 14, **caractérisé en ce que** l'évidement (74) comprend des surfaces de limitation (100, 102) opposées inclinées entre elles, qui sont disposées sur des côtés opposées de l'axe d'assemblage (104), la distance entre les surfaces de limitation (100, 102) s'agrandissant le long d'une direction qui est orientée à partir d'une extrémité avant (40) de la pince de serrage (14) vers l'extrémité arrière (38) de la pince de serrage (14).

16. Porte-outil (10) selon la revendication 13 ou 14, **caractérisé en ce que** l'évidement (74) comprend une surface de limitation (76) qui entoure l'axe d'assemblage (72).
